# EUROPÄISCHE PATENTSCHRIFT

(11) **EP 4 408 603 B1**
(45) Veröffentlichungstag und Bekanntmachung des Hinweises auf die Patenterteilung: **03.09.2025**
(21) Anmeldenummer: 22761078.9
(22) Anmeldetag: 29.07.2022
(51) Int. Cl.: B23K 26/03, B23K 26/08, B23K 26/244, B23K 26/26, B23K 26/32, B23K 37/04, B23K 37/047, H01M 8/02, B23K 101/36

(54) **VERFAHREN UND VORRICHTUNG ZUM LASERSCHWEISSEN VON PLATTENFOERMIGEN WERKSTUECKEN**
METHOD AND DEVICE FOR LASER WELDING PLANAR WORKPIECES
PROCÉDÉ ET DISPOSITIF DE SOUDAGE AU LASER DE PIÈCES À USINER PLATES

(30) Priorität: 27.09.2021 AT 507622021
(43) Veröffentlichungstag der Anmeldung: 07.08.2024
(73) Patentinhaber: ANDRITZ Soutec AG, 8413 Neftenbach (CH)
(72) Erfinder: MEYER, Hanspeter, 8536 Hüttwilen (CH); CLERC, Jean-Frédéric, 8180 Bülach (CH)
(74) Vertreter: Tschinder, Thomas
(86) Internationale Anmeldenummer: PCT/EP2022/071354
(87) Internationale Veröffentlichungsnummer: WO 2023/046342

(56) Entgegenhaltungen:
- DE-A1- 102016 200 387
- DE-A1- 102017 202 426
- DE-A1- 102020 202 691
- US-B1- 6 639 176

## Beschreibung

Die vorliegende Erfindung betrifft eine Vorrichtung und ein Verfahren zum Laserschweißen von metallischen Bauteilen in einem endlos umlaufenden Transportsystem, insbesondere von Bipolarplatten für Brennstoffzellen, beispielsweise im Nutzfahrzeugbau oder von Wärmetauscherplatten, siehe Ansprüche 1 und 8. Die Erfindung betrifft auch die Anwendung des Verfahrens, siehe Anspruch 12.

In der Automobilindustrie geht der Trend infolge endlicher Erdölreserven und fortschreitender Klimaerwärmung zunehmend in Richtung Reduktion von CO₂ und Einsatz von alternativen Antrieben. Anstelle von Verbrennungsmotoren kommen bei Personenwagen und LKW vermehrt Elektromotoren mit leistungsfähigen Batterien als Speichermedium zum Einsatz. In Zukunft werden sich aber auch andere Technologien wie beispielsweise Brennstoffzellen etablieren, insbesondere für den LKW-Bereich. Bipolarplatten (BPP) sind die Hauptbestandteile einer Brennstoffzelle und bestimmen damit maßgeblich die Herstellungskosten und den Wirkungsgrad eines Brennstoffzellensystems. Aufgrund verschiedener Vorteile hinsichtlich der Herstellbarkeit und der Materialeigenschaften wie Stabilität, geringe Blechdicke und vielfältige Beschichtungsmöglichkeiten rücken die metallischen Ausführungen der Bipolarplatten in den Mittelpunkt der Forschung und Entwicklung und werden aktuell als die favorisierte Variante für zukünftige Großserienanwendungen von Brennstoffzellen gesehen. Ein Brennstoffzellensystem besteht aus einer Vielzahl von Einzelzellen mit jeweils einer BPP zwischen den Zellen, wobei für automobile Anwendungen typischerweise 300 - 400 Bipolarplatten pro System benötigt werden. Aufgrund der hohen Zahl an BPP pro Einzelsystem ist selbst bei moderaten Szenarien zukünftig davon auszugehen, dass die benötigten Stückzahlen schnell sehr hohe Dimensionen annehmen werden. Diese Herausforderung kann auch als Chance für Zulieferbetriebe von BPP betrachtet werden. Voraussetzung hierfür ist aber eine wirtschaftliche und leistungsstarke Produktionstechnologie. Insbesondere das Schweißen der beiden Bipolarplattenhälften zu einer BPP ist aufgrund der Vielzahl von Schweißnähten, der damit verbundenen langen Schweißzeiten und den hohen Anforderungen an die Schweißnähte bei gleichzeitig sehr schwierigen Prozessbedingungen aufgrund der dünnen Materialien eine zentrale Problemstellung und derzeit noch ein entscheidendes Hindernis für eine kosteneffiziente Fertigung.

BPP als solche sind aus dem Stand der Technik bekannt. Sie bestehen in der Regel aus zwei Bipolarplattenhälften, die zusammengefügt werden. Diese sind in der Regel als geprägte Folien bzw. umgeformte Bleche ausgebildet. Die Bipolarplattenhälften liegen aufeinander und werden in der Regel im Überlappungsstoss mittels Laser dichtgeschweißt. Dabei erzeugt der Laser mehrere Meter Schweißnaht und eventuell zusätzliche Schweißpunkte. Alternativ sind auch Verfahren mit Widerstandsschweißen bekannt. Hierzu werden Schweißvorrichtungen verwendet, in denen die Bipolarplattenhälften oft mehrmals umgespannt werden müssen, damit eine Dichtkontur und sämtliche Schweißpunkte hergestellt werden können. Um sämtliche Dichtkonturen und Punkte schweißen zu können, muss dabei die zu schweißende Bipolarplatte aus der Spannvorrichtung gelöst und mit einer anderen Klemm- oder Schweißmaskenplatte neu gespannt werden, damit alle Bereiche der zu schweißenden BPP für den Schweißlaser zugänglich sind. Bei der Fertigung bereiten insbesondere umlaufende Dichtkonturen Probleme. Würden solche Dichtkonturen mit dem Laser in einem Schweißvorgang hergestellt, so könnte es sich als schwierig erweisen, im Inneren der Dichtkontur zusätzliche Spannelemente anzuordnen, welche die Bipolarplattenhälften im Inneren der umlaufenden Schweißkontur fixieren. Beim Umspannen der Platten besteht die Gefahr, dass die Positionierung nicht mehr übereinstimmt und Schweißpunkte an falschen Stellen gesetzt werden, und dass sich die Bipolarplatten beim Umspannen durch freiwerdende, interne Spannungen verziehen. Zusätzlich kann der gesamte Fertigungsprozess der Bipolarplatte durch das Umspannen der halbfertigen Bipolarplatte stark verzögert werden.

Die Patentschrift DE102016200387 beschreibt eine Vorrichtung und ein Verfahren zur Herstellung einer Bipolarplatte, bei dem der Verzug des Bauteils vergleichsweise gering ist. Das Einbringen von Schweißenergie erfolgt von oben und unten auf die BPP. Die Lage im Raum, bei der dies geschieht, ist nicht beschrieben.

In der WO2018149959 ist eine Spannvorrichtung mit Klemmhebeln gezeigt. Aus Bild und Text kann geschlossen werden, dass die Orientierung der BPP horizontal ist, d.h. die Fläche liegt horizontal auf einer Grundfläche auf.

Die CN 108637476 A beschreibt eine Vorrichtung zum Schweißen von Bipolarplatten mit einer elektromagnetischen Klemmvorrichtung, wobei die Platten horizontal liegend mit einem Schweißlaser verschweißt werden.

Die CN 107350623 A beschreibt eine Anordnung zum Laserschweißen in der die senkrecht stehenden Werkstücke auf einer rotierenden Plattform fixiert sind und mittels eines Lasers geschweißt werden.

Die EP 3112074 A1 beschreibt einen Düsenwechsler zur Montage und Demontage von Düsen in einer Laserbearbeitungsmaschine.

Die US 6,639,176 B1 (offenbarend den Oberbegriff der Ansprüche 1 und 8) beschreibt eine Schweißvorrichtung, bei der Bleche in einer vertikalen Ebene miteinander verschweißt werden, sodass der Platzbedarf für die Schweißvorrichtung möglichst gering ist.

Die DE 10 2017 202 426 A1 beschreibt ein Verfahren zur Separierung flacher Werkstücke mit Hilfe des TLS-Verfahrens (Thermisches Laserstrahl Separieren).

GRÄBENER Maschinentechnik zeigt auf der Homepage eine komplette Fertigungslinie für BPP. Unter https://www.graebener.com/en/cutting-and-welding sind auch zwei Schweißanlagen genauer gezeigt. BPP werden im Stillstand, horizontal liegend geschweißt.

Die Firma SITEC HTTPS://WWW.SITEC-TECHNOLOGY.DE/ stellt automatisierbare Laserschweißanlagen her, wobei das Schweißen auch hier im Stillstand und in einer horizontalen Ebene erfolgt.

Die Europäische Patentschrift EP3038789 beschreibt ein Verfahren, um in der industriellen Produktion von geschweißten Blechteilen - insbesondere von Tailored Blanks für die Automobilindustrie - die Zykluszeiten zu erhöhen und damit die Produktionskosten zu senken. Das Verfahren basiert auf einem Transportsystem mit einer fliegenden Optik und horizontaler Ausrichtung des Werkstücks während des Schweißens und benötigt keine aufwändige Kühlung der heißen Schweißnaht und keine Mittel zum einseitigen Festhalten der Werkstücke mit hoher Kraft auf dem Transportband. Damit kann der negative Einfluss des Platinen-Abstandes auf die Zykluszeit der Maschine massiv reduziert werden. Insgesamt können mit dem Verfahren die Schweiß-Nebenzeiten reduziert werden.

Bei einem solchen bekannten System mit vertikaler Bewegungsebene kann die rücklaufende Strecke des Transportsystems allerdings nicht für Manipulationen verwendet werden, außer man verschafft sich Zugang von der Maschinenunterseite. Da das beschriebene Verfahren nur einen statischen Laserstrahl vorsieht, kann für die Laserbearbeitung nicht quer zur Transportrichtung verfahren werden. Zudem muss die gesamte Laseroptik bewegt werden, was infolge der großen Masse negative Folgen bezüglich Dynamik, Genauigkeit und Leistungsbedarf nach sich zieht. Da zudem das Verhältnis der Kettengliedlänge zum Kettenumlenkradius oft sehr groß ist, wird bei einem Kettenantrieb mittels Kettenrads durch den bekannten Polygoneffekt ein signifikanter Positionsfehler auf die Kette induziert. Gängige Praxis ist es, diesen unerwünschten Effekt zumindest auf einem Trum (im Vorlauf) mit beispielsweise einer elektronischen Kurvenscheibe auf dem Kettenantrieb zu kompensieren, was aber auf Grund der gegebenen, nicht stetigen Kinematik und der Massen nur mit bedingter Genauigkeit gelingt. Bei einer Kette mit zwei Umlenkungen wird dabei aber das Gegentrum (im Rücklauf) unter Umständer überkompensiert (Hin- und Her-Beschleunigung während Bewegung), und es wird sehr anspruchsvoll, mit diesem Trum eine Funktion zu synchronisieren. Der Polygoneffekt hat aber nicht nur auf die Dynamik einen Einfluss, sondern auch auf die Kettenlänge selbst. Diese Kettenlängenänderung muss deshalb mittels mindestens eines dynamischen Kettenspanners oder einer Kompensations-Umlenkkurve kompensiert werden, damit eine mehr oder weniger konstante Kettenspannung beibehalten werden kann. Nicht vorgespannte Ketten können chaotische Schwingungen erzeugen und somit zusätzliche Ungenauigkeiten bewirken.

Nachteilig an den vorab erwähnten Lösungen sind der hohe technische Aufwand für das prozesssichere Spannen der Bauteile, große Maschinen-Dimensionen mit hohen Investitionskosten sowie die insgesamt geringe Produktivität der Gesamtanlage.

Der vorliegenden Erfindung liegt daher die Aufgabe zu Grunde, eine Vorrichtung und ein Verfahren zu offenbaren, welche die vorstehend genannten Nachteile nicht aufweist.

Diese Aufgabe wird erfindungsgemäß durch eine Vorrichtung mit den Merkmalen gemäß 1 gelöst. Vorteilhafte Ausführungsvarianten sind in den abhängigen Ansprüchen angegeben. Das erfindungsgemäße Verfahren weist die Merkmale von Anspruch 8 auf.

In der erfindungsgemäßen Vorrichtung werden die Werkstücke, die in der Regel jeweils aus zwei aufeinandergelegten Metallplatten bestehen, umlaufend in einer Horizontalebene transportiert und verschweißt. Die plattenförmigen Werkstücke stehen dabei im Wesentlichen senkrecht, also lotrecht. Im Gegensatz dazu werden bei herkömmlichen Anlagen die Werkstücke waagrecht liegend verschweißt. Ein Vorteil dieser Erfindung liegt somit darin, dass der Schweißprozess in einer vertikalen Ebene, also in Lotrichtung und ungefähr senkrecht zur Transportrichtung erfolgt. Damit bleiben Schweißspritzer nicht auf dem zu bearbeitenden Werkstück liegen, womit eine geringere Verschmutzung der Werkstücke und der Vorrichtung resultiert.

Erfindungsgemäß werden die Werkstücke im Bearbeitungsbereich, in dem sie verschweißt werden, mit einer konstanten Geschwindigkeit transportiert und dort durch zumindest zwei gleichzeitig arbeitende Schweißlaser verschweißt. Außerdem ist eine Positionsmessung zur Positionsermittlung der Werkstücke vorgesehen. Die Positionsmessung wird zur Steuerung der zumindest zwei Schweißlaser verwendet.

Vorzugsweise sind mehr als zwei parallel arbeitende Schweißlaser vorgesehen, beispielsweise sind auch Anordnungen mit 8 Schweißlasern möglich.

Damit die Werkstücke mit einer konstanten Geschwindigkeit durch den Bearbeitungsbereich transportiert werden können, muss der Polygoneffekt kompensiert werden. Dies kann beispielsweise durch eine Helix geschehen. Dabei sind alle aktuell im Bearbeitungsbereich befindlichen Kettenglieder während der Bearbeitungsphase im Eingriff mit der sich in diesem Bereich befindlichen Schraube (Helix). Dadurch wird ein genaueres Ausrichten der Kettenglieder zueinander und somit eine Steigerung der Qualität erreicht. Das sich ohne überlagerte Beschleunigungen bewegte Gegentrum bewirkt, dass das Be- und Entladen der Kettenglieder mit Werkstücken ohne aufwändige Positionskompensationen durchgeführt werden kann und somit eine optimale Ausnutzung des Platzbedarfs ermöglicht. Im Weiteren erlaubt eine Verwendung von mehreren Schweißlasern eine Produktionssteigerung. Die Laserstrahlen können dabei ein Werkstück gleichzeitig bearbeiten und danach sofort zum nächsten Werkstück weiterspringen.

Die möglichst eng nebeneinander platzierten Schweißlaser reduzieren ebenfalls die Zykluszeit und schaffen zusätzlichen Bauraum. Der Einsatz von speziellen Laseroptiken erlaubt zudem die Bearbeitung einer großen Bearbeitungsfläche, ohne dass sich die Laseroptik relativ zum Produktetransportsystem bewegt.

In der vorgeschlagenen Konfiguration wird das Werkstück nur einmal eingespannt und anschließend bearbeitet, sodass ein mehrmaliges Einspannen mit den bekannten Problemen einer genauen Justierung während der Bearbeitung des Werkstücks entfällt und insgesamt eine hohe Genauigkeit beim Beladen, Bearbeiten und Entladen erreicht wird.

Ziel ist es, den Teileausstoß pro Zeiteinheit signifikant zu erhöhen bei gleichzeitiger Teilekostenreduktion. Der Einsatz von Laseroptiken erlaubt eine große Bearbeitungsfläche, ohne dass sich die Laseroptik relativ zur Produktetransportvorrichtung bewegen muss, was eine Steigerung der Qualität bewirkt. Das Überschneiden der Laserstrahlen und das gleichzeitige Bearbeiten auf mehreren Teilungspositionen erlaubt eine optimale Ausnutzung des Lasers, eine kompakte Bauweise und extrem lange Schweißnähte in kürzester Zeit und reduziert somit die Bearbeitungskosten.

Die hier vorgestellte Erfindung ermöglicht also insgesamt eine effiziente und qualitativ hochstehende Fertigung.

Die vorliegende Erfindung wird im Folgenden anhand von Ausführungsbeispielen unter Bezugnahme auf Zeichnungen weiter erläutert. Dabei zeigen:
- Fig. 1: eine Draufsicht auf ein erstes Laserbearbeitungs- und Produktetransportsystem in schematischer Darstellung,
- Fig. 2: eine Draufsicht auf ein zweites, alternatives Laserbearbeitungs- und Produktetransportsystem in schematischer Darstellung,
- Fig. 3: eine Draufsicht auf ein drittes, alternatives Laserbearbeitungs- und Produktetransportsystem in schematischer Darstellung, und
- Fig. 4: eine Seitenansicht des ersten Laserbearbeitungs- und Produktetransportsystem wiederum in schematischer Darstellung.

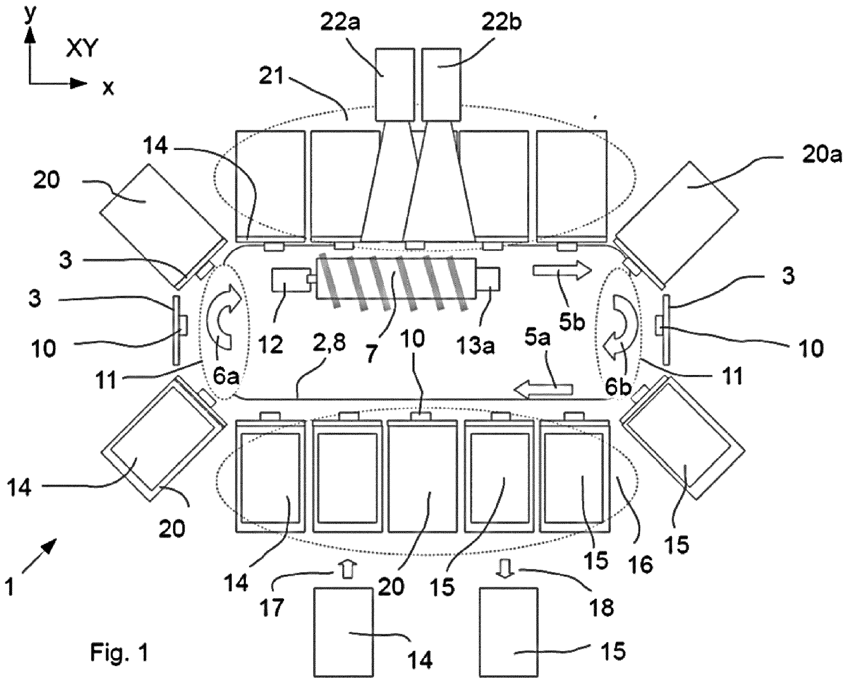

Fig. 1 zeigt in einer Draufsicht ein erstes Laserbearbeitung- und Transportsystem 1, mit dem endlos umlaufenden Produktetransportsystem 2 und der mindestens einen Produktetransportsystemführung 8. Das Produktetransportsystem 2 wird mittels Schraubenantrieb 12 mit Drehgeber 13a im Uhrzeigersinn in der Transportebene XY (Horizontalebene) bewegt und durchläuft dabei die linearen Bereiche 5a,5b und in den Kompensations-Umlenkkurven 11 die Kurvenbereiche 6a,6b. Das Produktetransportsystem 2, beispielsweise ein kettengetriebenes System, besteht aus einer Anzahl Transportgliedern 3, beispielsweise Kettengliedern, welche mit je einem schwenkbaren Klapphebel 20 und je mindestens einer Kurvenrolle 10 versehen sind, die in die Helix 7 eingreifen. Die Beladung 17 der Schweißvorrichtungen des umlaufenden Produktetransportsystems 2 mit einem Werkstück 14 erfolgt im linearen Bereich 5a bei ausgeklapptem und horizontal liegendem Klapphebel 20 in der Be-/Entladezone 16. Im Kurvenbereich 6a wird das Werkstück 14 durch Hochklappen des Klapphebels 20 in eine senkrechte Position gebracht und in der Schweißvorrichtung fixiert, beispielsweise mit Hilfe von Magnetkräften. In einem nächsten Schritt wird der Klapphebel 20 wieder geöffnet und in eine ungefähr horizontale Lage gebracht. Das Werkstück verbleibt dabei in der senkrechten Position. Im linearen Bereich 5b erfolgt in der Laserbearbeitungszone 21 das Verschweißen des Werkstücks 14 mittels der fixen Schweißlaser 22a,22b. Die Werkstücke 14 werden in der Laserbearbeitungszone 21 mittels des Produktetransportsystems 2 an den Schweißlasern 22a,22b vorbeibewegt. In der Be-/Entladezone 16 wird das bearbeitete (geschweißte) Werkstück 15 durch Entladung 18 der Schweißvorrichtung vom endlos umlaufenden Produktetransportsystem 2 entfernt.

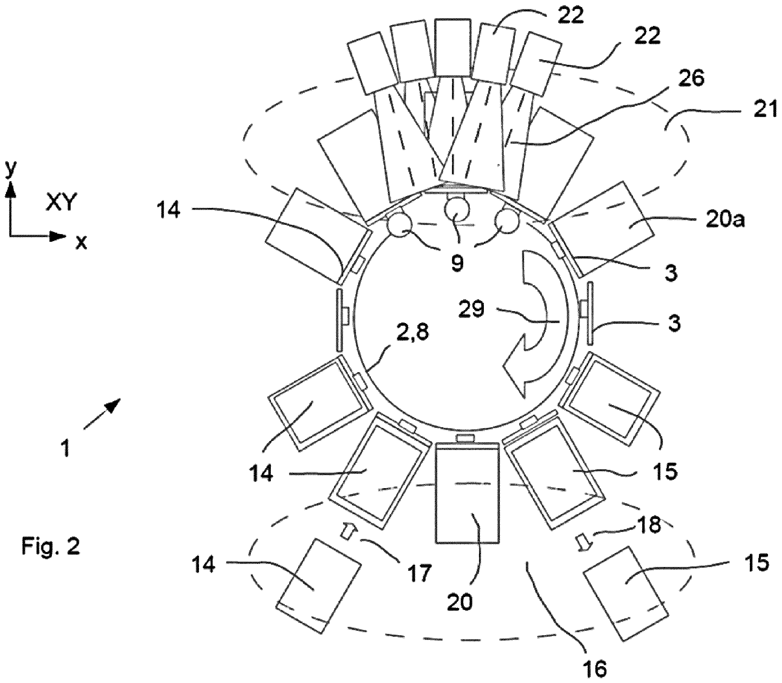

Fig. 2 zeigt in einer Draufsicht ein zweites, alternatives Laserbearbeitung- und Transportsystem 1, mit dem endlos umlaufenden Produktetransportsystem 2, das mit Antriebsmitteln versehen ist und sich in einer gleichmäßigen Rotationsbewegung im Uhrzeigersinn auf der Kreisbahn 29 in der Transportebene XY (Horizontalebene) bewegt. Das Produktetransportsystem 2 besteht aus einer Anzahl von Transportgliedern 3, welche mit je einem schwenkbaren Klapphebel 20 versehen sind. Die Beladung 17 der Schweißvorrichtung des umlaufenden Produktetransportsystems 2 mit einem zu bearbeitenden Werkstück 14 erfolgt in der Be-/Entladezone 16 bei ausgeklapptem und horizontal liegendem Klapphebel 20. Durch Zurückklappen des Klapphebels 20 wird das Werkstück 14 in eine senkrechte Position gebracht und in der Schweißvorrichtung fixiert. In einem nächsten Schritt wird der Klapphebel 20 wieder geöffnet und wieder in eine ungefähr horizontale Lage gebracht. In der Laserbearbeitungszone 21 erfolgt eine kontinuierliche Positionsmessung 9 und das Verschweißen des Werkstücks 14 mittels Laserstrahlen 26 der mindestens zwei Schweißlaser 22, welche möglichst eng nebeneinander platziert sind. Hier sind 5 Schweißlaser 22 dargestellt aber auch eine andere Anzahl von Schweißlasern 22 ist möglich. Das Werkstücke 14 wird in der Schweißebene mittels des Produktetransportsystems 2 an den Schweißlasern 22,22a,22b vorbeibewegt. In der Be-/Entladezone 16 wird das bearbeitete Werkstück 15 durch Entladung 18 der Schweißvorrichtung vom endlos umlaufenden Produktetransportsystem 2 entfernt.

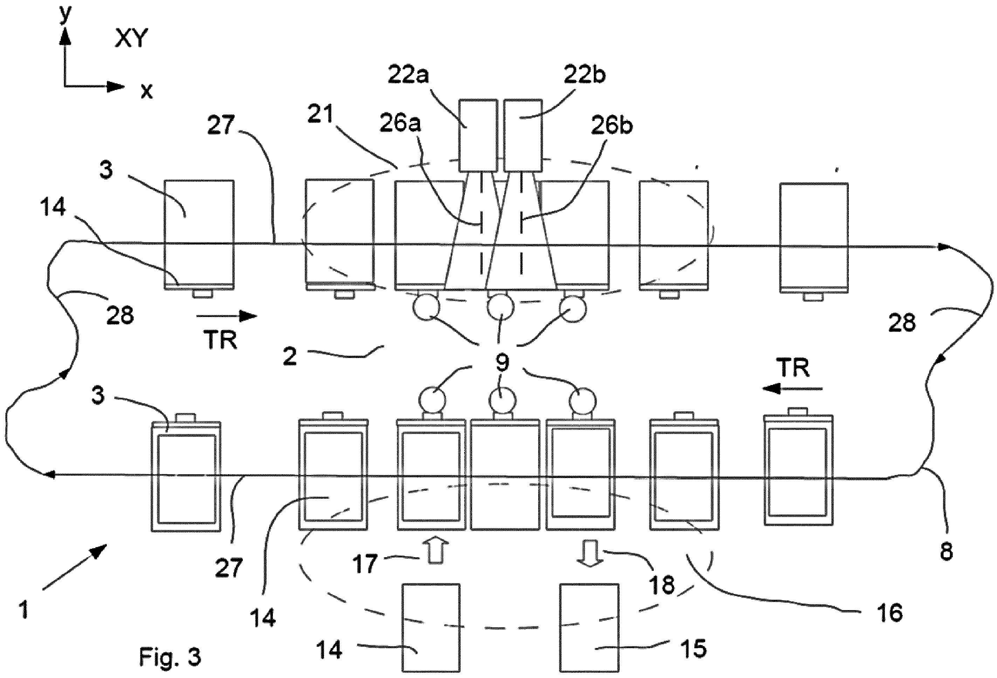

Fig. 3 zeigt in einer Draufsicht ein drittes, alternatives Laserbearbeitung- und Transportsystem 1 mit dem Produktetransportsystem 2 und der mindestens einen Produktetransportsystemführung 8. Die Transportglieder 3 sind mit Antriebsmitteln versehen, beispielsweise motorbetriebene Wagen, und bewegen sich auf einem fixen Pfad 27 mit fester Teilung und einem freien Pfad 28 mit freier Teilung in Transportrichtung TR in der Transportebene XY. Bei den Antriebsmitteln kann es sich beispielsweise um Linearmotoren handeln. Die Beladung 17 der Schweißvorrichtungen der umlaufenden Transportglieder 3 mit den zu bearbeitenden Werkstücken 14 erfolgt in der Be-/Entladezone 16 auf dem fixen Pfad 27. In der Laserbearbeitungszone 21, die sich ebenfalls auf dem fixen Pfad 27 befindet, erfolgt eine kontinuierliche, lineare Positionsmessung 9 sowie die Bearbeitung des zu bearbeitenden Werkstücks 14 mittels der mindestens zwei Laserstrahlen 26a,26b der mindestens zwei Schweißlaser 22a,22b. Das Werkstück 14 wird in der Schweißebene mittels des Produktetransportsystems 2 an den Schweißlasern 22a,22b vorbeibewegt. In der Be-/Entladezone 16 wird das bearbeitete Werkstück 15 durch Entladung 18 der Schweißvorrichtung vom endlos umlaufenden Produktetransportsystem 2 entfernt.

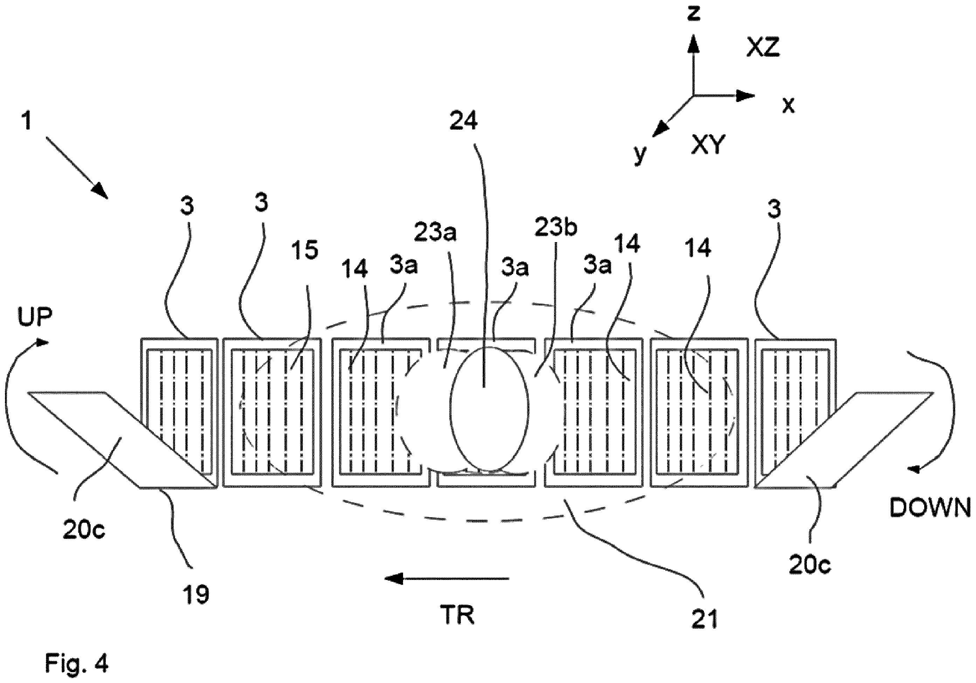

Fig. 4 zeigt in einer Seitenansicht die Laserbearbeitungszone 21 eines Laserbearbeitung- und Transportsystems 1, mit dem umlaufenden Produktetransportsystem 2, dessen Transportglieder 3 sich kontinuierlich in der TransportEbene XY (Horizontalebene) in Transportrichtung TR bewegen. Die zu bearbeitenden Werkstücke 14 sind auf den Transportgliedern 3 fixiert und werden in der Schweißebene XZ bearbeitet. Die mindestens zwei Schweißlaser decken auf den aktuellen Teilungspositionen 3a die Bearbeitungsbereiche 23a,23b ab, wobei eine Überdeckung 24 der Bearbeitungsbereiche 23a,23b resultiert. Die Klapphebel 20 sind um die Schwenkachse 19 schwenkbar und dienen zum Platzieren und Fixieren der zu bearbeitenden Werkstücke 14 und der bearbeiteten-Werkstücke 15 auf den Transportgliedern 3. Die Klapphebel 20 werden in der Position "halb offen 20c" im Status "Herunterklappen" DOWN bzw. "Hochklappen" UP gezeigt.

### Bezeichnungsliste

1 Laserbearbeitung- und Transportsystem
2 Produktetransportsystem
3 Transportglied
3a aktuelle Teilungsposition
5a,5b linearer Bereich
6a,6b Kurvenbereich
7 Helix
8 Produktetransportsystemführung
10 Kurvenrolle
11 Kompensations-Umlenkkurve
12 Schraubenantrieb
13a Drehgeber
9 Positionsmessung
14 plattenförmiges Werkstück
15 bearbeitetes Werkstück
16 Be-/Entladezone
17 Beladung
18 Entladung
19 Schwenkachse
20 Klapphebel
20a Klapphebel offen
20b Klapphebel geschlossen
20c Klapphebel halboffen
21 Laserbearbeitungszone
22 Schweißlaser
22a Schweißlaser
22b Schweißlaser
23a,23b Bearbeitungsbereich
24 Überdeckung
26,26a,26b Laserstrahl
27 fixer Pfad
28 freier Pfad
29 Kreisbahn
TR Transportrichtung
XY Transportebene (Horizontalebene)
XZ Schweißebene

## Patentansprüche

1. Vorrichtung zum Herstellen von verschweißten plattenförmigen Werkstücken (14, 15), insbesondere zur Herstellung von Bipolarplatten oder Wärmetauscherplatten, wobei die plattenförmigen Werkstücke (14) vertikal stehend in einem Bearbeitungsbereich (13a, 23b) mittels eines Schweißlasers (22, 22a, 22b) verschweißt werden, **dadurch gekennzeichnet, dass** die Vorrichtung ein in einer Horizontalebene XY endlos umlaufendes Produktetransportsystem (2), bestehend aus mehreren Transportgliedern (3) zum Fixieren der plattenförmigen Werkstücke (14) aufweist, sodass diese im Wesentlichen vertikal stehend durch den Bearbeitungsbereich (23a, 23b) transportiert werden, wobei Antriebsmittel (12) für den Transport der Transportglieder (3) durch den Bearbeitungsbereich (23a, 23b) vorgesehen sind, wobei die Transportglieder (3) durch die Antriebsmittel (12) im Bearbeitungsbereich (23a, 23b) mit einer konstanten Geschwindigkeit hindurchtransportierbar sind und wobei die Vorrichtung zumindest zwei Schweißlaser (22, 22a, 22b) aufweist, sodass die Werkstücke (14) im Bearbeitungsbereich (23a, 23b) durch diese zwei gleichzeitig arbeitenden Schweißlaser (22, 22a, 22b) verschweißbar sind, wobei die Vorrichtung eine Positionsmesseinrichtung (9) zur Positionsermittlung der Werkstücke (14) aufweist, zur Steuerung der zumindest zwei Schweißlaser (22, 22a, 22b).

2. Vorrichtung nach Anspruch 1, **dadurch gekennzeichnet, dass** die mindestens beiden Schweißlaser (22,22a,22b) jeweils mit einer Optik versehen sind, durch die die Laserstrahlen (26, 26a, 26b) in horizontaler und vertikaler Richtung umlenkbar ist, sodass dadurch jeder Punkt auf der Oberfläche der Werkstücke (14) erreichbar ist.

3. Vorrichtung nach Anspruch 1 oder 2, **dadurch gekennzeichnet, dass** die Antriebsmittel (12) als Schraubenantrieb (12) mit Helix (7) oder als Linearmotor ausgestaltet sind.

4. Vorrichtung nach einem der Ansprüche 1 bis 3, **dadurch gekennzeichnet, dass** mehr als zwei Schweißlaser (22, 22a, 22b) vorgesehen sind, beispielsweise 3, 4, 5, 6, 7 oder 8.

5. Vorrichtung nach einem der Ansprüche 1 bis 4, **dadurch gekennzeichnet, dass** die Transportglieder (3) als Kettenglieder oder als Wagen ausgestaltet sind.

6. Vorrichtung nach einem der Ansprüche 1 bis 5, **dadurch gekennzeichnet, dass** die mindestens zwei Schweißlaser (22,22a,22b) feststehend angeordnet sind, wobei die Laserstrahlen (26, 26a, 26b) durch ein Spiegelsystem umpositionierbar sind, sodass dadurch die Laserstrahlen (26,26a,26b) von einem Werkstück (14) zum nächsten Werkstück (14) am nachfolgenden Transportglied (3) umpositionierbar sind.

7. Vorrichtung nach einem der Ansprüche 1 bis 6, **dadurch gekennzeichnet, dass** die Werkstücke (14) senkrecht zur Transportebene XY mittels Klapphebeln (20a,20c) auf den Transportgliedern (3) fixiert sind.

8. Verfahren zum Herstellen von verschweißten plattenförmigen Werkstücken (14, 15), insbesondere zur Herstellung von Bipolarplatten oder Wärmetauscherplatten, wobei die plattenförmigen Werkstücke (14) in einem Bearbeitungsbereich (23a, 23b) verschweißt werden, **dadurch gekennzeichnet, dass** die Werkstücke (14) im Wesentlichen senkrecht stehend auf Transportgliedern (3) durch ein endlos umlaufendes Produktetransportsystem (2) in einer Horizontalebene XY transportiert werden, wobei die Transportglieder (3) im Bearbeitungsbereich (23a, 23b) mit einer konstanten Geschwindigkeit hindurchbewegt werden, wobei die Werkstücke (14) im Bearbeitungsbereich (23a, 23b) durch zumindest zwei gleichzeitig arbeitende Schweißlaser (22, 22a, 22b) geschweißt werden, wobei die Position der Werkstücke (14) ermittelt wird und dadurch die zumindest zwei Schweißlaser (22, 22a, 22b) gesteuert werden.

9. Verfahren nach Anspruch 8, **dadurch gekennzeichnet, dass** die Werkstücke (14) im Bearbeitungsbereich (23a, 23b) auf einer horizontalen geraden Linie geführt werden.

10. Verfahren nach Anspruch 8, **dadurch gekennzeichnet, dass** die Werkstücke (14) im Bearbeitungsbereich auf einer Kreisbahn (29) geführt werden.

11. Verfahren nach den Ansprüchen 8 bis 10, **dadurch gekennzeichnet, dass** durch die Anordnung der mindestens zwei Schweißlaser (22,22a,22b) eine Überdeckung (24) der Schweißbereiche erreicht wird.

12. Anwendung des Verfahrens nach einem der Ansprüche 8 bis 11 zur Herstellung von Bipolarplatten für Brennstoffzellen oder für Wärmetauscherplatten zur Übertragung von thermischer Energie.

## Claims

1. Device for producing welded plate-shaped workpieces (14, 15), in particular for producing bipolar plates or heat exchanger plates, wherein the plate-shaped workpieces (14) are welded vertically in a processing area (23a, 23b) with a welding laser (22, 22a, 22b), **characterized in that** the device has an endlessly circulating product transport system (2) in a horizontal level XY, consisting of several conveyor links (3) for fixation of the plate-shaped workpieces (14), where these are transported substantially vertically through the processing area (23a, 23b), wherein a drive means (12) is provided for transporting the conveyor links (3) through the processing area (23a, 23b), wherein the conveyor links (3) can be transported through the processing region (23a, 23b) at a constant speed by the drive means (12), and wherein the device has at least two welding lasers (22, 22a, 22b), so that the workpieces (14) in the processing area (23a, 23b) can be welded by these two welding lasers (22, 22a, 22b) operating simultaneously, wherein the device has a position measuring device (9) for determining the position of the workpieces (14), for controlling the at least two welding lasers (22, 22a, 22b).

2. Device according to Claim 1, **characterised in that** the at least two welding lasers (22, 22a, 22b) are each provided with an optical system by means of which the laser beams (26, 26a, 26b) can be deflected in the horizontal and vertical directions, so that each point on the surface of the workpieces (14) can be reached.

3. Device according to Claim 1 or 2, **characterised in that** the drive means (12) is designed as a screw drive (12) with helix (7) or as a linear motor.

4. Device according to one of Claims 1 to 3, **characterised in that** more than two welding lasers (22, 22a, 22b) are provided, for example 3, 4, 5, 6, 7 or 8.

5. Device according to one of Claims 1 to 4, **characterised in that** the conveyor links (3) are chain links or conveyor trolleys.

6. Device according to one of Claims 1 to 5, **characterised in that** the at least two welding lasers (22, 22a, 22b) are arranged in a fixed position, wherein the laser beams (26, 26a, 26b) can be repositioned by a mirror system, so that the laser beams (26, 26a, 26b) can thereby be repositioned from one workpiece (14) to the next workpiece (14) on the following conveyor link (3).

7. Device according to one of Claims 1 to 6, **characterised in that** the workpieces (14) are fixed to the conveyor links (3) perpendicularly to the transport level XY by means of folding levers (20a, 20c).

8. Method for producing welded plate-shaped workpieces (14, 15), in particular for producing bipolar plates or heat exchanger plates, wherein the plate-shaped workpieces (14) are welded in a processing area (23a, 23b), **characterised in that** the workpieces (14) are transported substantially vertically on conveyor links (3) through an endlessly circulating product transport system (2) in a horizontal level XY, wherein the conveyor links (3) are moved through the processing area (23a, 23b) at a constant speed, wherein the workpieces (14) are welded in the processing area (23a, 23b) by at least two welding lasers (22, 22a, 22b) operating simultaneously,
wherein the position of the workpieces (14) being determined and the at least two welding lasers (22, 22a, 22b) being controlled thereby.

9. Method according to Claim 8, **characterised in that** the workpieces (14) are guided on a horizontal straight line in the processing area (23a, 23b).

10. Method according to Claim 8, **characterised in that** the workpieces (14) in the processing area are guided on a circular path (29).

11. Method according to Claims 8 to 10, **characterised in that** the arrangement of the at least two welding lasers (22, 22a, 22b) achieves an overlap (24) of the welding areas.

12. Application of the method according to one of claims 8 to 11 for the production of bipolar plates for fuel cells or for heat exchanger plates for transferring thermal energy.

## Revendications

1. Dispositif permettant de fabriquer des pièces tabulaires soudées (14, 15), en particulier permettant de fabriquer des plaques bipolaires ou des plates d'échangeur thermique, dans lequel les pièces tabulaires (14) sont soudées verticalement dans une zone d'usinage (13a, 23b) au moyen d'un laser de soudage (22, 22a, 22b), **caractérisé en ce que** le dispositif comporte un système de transport de produits tournant en continu (2) dans un plan horizontal XY, constitué d'une pluralité de maillons de transport (3) permettant de fixer les pièces tabulaires (14) de telle manière à ce que ces dernières soient transportées sensiblement à la verticale dans la zone d'usinage (23a, 23b), dans lequel des entraînements à vis (12) sont destinés au transport des maillons de transport (3) dans la zone d'usinage (23a, 23b), dans lequel les maillons de transport (3) peuvent être transportés dans la zone d'usinage (23a, 23b) à une vitesse constante par les entraînements à vis (12), et le dispositif comportant au moins deux lasers de soudage (22, 22a, 22b), lesdits deux lasers de soudage (22, 22a, 22b) permettant ainsi de souder simultanément les pièces à usiner (14) dans la zone de traitement/usinage (23a, 23b), le dispositif comportant un dispositif de mesure de position (9) destiné à déterminer la position des pièces à usiner (14) afin de commander les au moins deux lasers de soudage (22, 22a, 22b).

2. Dispositif selon la revendication 1, **caractérisé en ce que** les au moins deux lasers de soudage (22, 22a, 22b) sont chacun équipés d'une optique au moyen de laquelle les faisceaux laser (26, 26a, 26b) peuvent être dirigés dans les directions horizontale et verticale de manière à atteindre chaque point sur la surface des pièces à usiner (14).

3. Dispositif selon la revendication 1 ou 2, **caractérisé en ce que** les moyens d'entraînement (12) se présente sous la forme d'un entraînement à vis (12) en hélice (7) ou d'un moteur linéaire.

4. Dispositif selon l'une quelconque des revendications 1 à 3, **caractérisé en ce que** ledit dispositif compte au moins deux lasers de soudage (22, 22a, 22b), par exemple 3, 4, 5, 6, 7 or 8.

5. Dispositif selon l'une quelconque des revendications 1 à 4, **caractérisé en ce que** les maillons de transport (3) sont des maillons de chaîne ou des chariots de transport.

6. Dispositif selon l'une quelconque des revendications 1 to 5, **caractérisé en ce que** les au moins deux lasers de soudage (22, 22a, 22b) sont disposés dans une position fixe, dans lequel les faisceaux laser (26, 26a, 26b) peuvent être repositionnés par un système de miroirs qui permettent ainsi de repositionner les faisceaux lasers (26, 26a, 26b) d'une pièce à usiner (14) à la suivante (14) disposée sur le maillon de transport suivant (3).

7. Dispositif selon l'une quelconque des revendications 1 à 6, **caractérisé en ce que** les pièces à usiner (14) sont fixées aux maillons de transport (3) perpendiculairement au plan de transport XY au moyen de bras relevables (20a, 20c).

8. Procédé permettant de fabriquer des pièces tabulaires soudées (14, 15), en particulier permettant de fabriquer des plaques bipolaires ou des plates d'échangeur thermique, dans lequel les pièces tabulaires (14) sont soudées verticalement dans une zone de traitement/usinage (23a, 23b), **caractérisé en ce que** les pièces (14) sont transportées essentiellement à la verticale sur les maillons de transport (3) par un système de transport de produits tournant en continu (2) dans un plan horizontal XY, dans lequel les maillons de transport (3) se déplacent dans la zone d'usinage (23a, 23b) à une vitesse constante, les pièces (14) étant soudées dans la zone de traitement (23a, 23b) par au moins deux lasers de soudage (22, 22a, 22b) qui fonctionnent simultanément, dans lequel la position des pièces (14) est déterminée ce qui permet ainsi de commander les au moins deux lasers de soudage (22, 22a, 22b).

9. Procédé selon la revendication 8, **caractérisé en ce que** les pièces (14) suivent une ligne droite horizontale pour rejoindre la zone d'usinage (23a, 23b).

10. Procédé selon la revendication 8, **caractérisé en ce que** les pièces (14) dans la zone d'usinage sont guidés sur un chemin circulaire (29).

11. Procédé selon les revendications 8 à 10, **caractérisé en ce que** la disposition des au moins deux lasers de soudage (22, 22a, 22b) permettent un chevauchement (24) des zones de soudage.

12. Application du procédé selon l'une quelconque des revendications 8 à 11 permettant de fabriquer des plaques bipolaires pour des piles à combustible ou des plaques d'échangeur thermique pour le transfert d'énergie thermique.
